# EUROPÄISCHE PATENTANMELDUNG

(11) **EP 3 290 856 A1**
(43) Veröffentlichungstag der Anmeldung: **07.03.2018**
(21) Anmeldenummer: 16186609.0
(22) Anmeldetag: 31.08.2016
(51) Int. Cl.: F41G 7/00, F41G 7/22, H01Q 1/28, H01Q 5/22, G01S 13/86, H01Q 21/06, H01Q 21/08

(54) **FLUGKÖRPER MIT SENSORANORDNUNG**

(71) Anmelder: Airbus Defence and Space GmbH, 82024 Taufkirchen (DE); MBDA Deutschland GmbH, 86529 Schrobenhausen (DE)
(72) Erfinder: ZIEGLER, Volker, 85662 Hohenbrunn (DE); PRECHTEL, Ulrich, 81739 München (DE); MEUSLING, Askold, 83607 Holzkirchen (DE); LEBERER, Ralf, 89075 Ulm (DE); SCHWAB, Wolfgang, 80637 München (DE)
(74) Vertreter: Isarpatent

(57) **Zusammenfassung**

Ein Flugkörper umfasst eine Sensoranordnung, welche ein Substrat, eine MIMO-Radararchitektur bestehend aus vier linearen Arrays aus Antennenelementen, welche in einem Rechteck auf dem Substrat angeordnet sind, und einen optischen Sensor aufweist. Der optische Sensor ist auf dem Substrat angeordnet und wird von den vier linearen Arrays aus Antennenelementen umschlossen.

## Beschreibung

### TECHNISCHES GEBIET

Die Erfindung betrifft einen Flugkörper, wie etwa einen Lenkflugkörper, mit einer Sensoranordnung aus kombinierten Sensoren.

### TECHNISCHER HINTERGRUND

Für unterschiedliche Flugphasen eines Flugkörpers werden verschiedene Sensordaten aus dem Umfeld des Flugkörpers benötigt. Aufgrund des beschränkten Einbauvolumens in einem Flugkörper besteht häufig nur die Wahl zwischen verschiedenen Sensoren, die gemeinsam mangels Platz nicht in den Flugkörper eingebaut werden können.

Die Druckschrift DE 10 2012 111 201 A1 offenbart ein Sensorsystem zur Erkennung von an einem Überwachungsobjekt versteckt mitgeführten Gegenständen, umfassend eine Vielzahl von Sensoreinrichtungen, die derart angeordnet sind, dass der Überwachungsbereich von ihnen aus unterschiedlichen Blickwinkeln erfassbar ist sowie eine Auswerteeinrichtung zur Auswertung der von den Sensoreinrichtungen erfassten Daten.

Die Druckschrift WO 2015/075072 A1 offenbart eine Überwachungsvorrichtung mit einer optischen Kamera, die eine Apertur aufweist, und einem Radarsensor mit ein oder mehreren Antennen, die ein virtuelles Antennenarray aufspannen, welches im Bezug auf die Apertur der optischen Kamera das gleiche Aperturzentrum aufweist.

### ZUSAMMENFASSUNG DER ERFINDUNG

Es ist ausgehend von diesem bekannten Stand der Technik eine der Aufgaben der vorliegenden Erfindung, die Umfelddetektion von Flugkörpern zu verbessern.

Die vorliegende Erfindung bezieht sich in einem Aspekt auf einen Flugkörper, mit einer Sensoranordnung, welche ein Substrat, eine MIMO-Radararchitektur bestehend aus vier linearen Arrays aus Antennenelementen, welche in einem Rechteck auf dem Substrat angeordnet sind, und einen optischen Sensor umfasst. Der optische Sensor ist auf dem Substrat angeordnet und wird von den vier linearen Arrays aus Antennenelementen umschlossen.

Einer der Vorteile des erfindungsgemäßen Flugkörpers ist die kompakte Bauweise der Sensoranordnung, durch die das beschränkte Einbauvolumen im vorderen Bereich des Flugkörpers optimal ausgenutzt werden kann. Insbesondere ist es durch die kombinierte Sensorik aus optischem Sensor und Radarsensor in der Sensoranordnung möglich, einen größeren Teil des elektromagnetischen Spektrums zur Umfelddetektion des Flugkörpers auszunutzen als esmit einem einzelnen Sensortyp alleine möglich ist.

Besonders vorteilhaft ist es, dass vollbesetzte, elektronisch steuerbare Antennenarrays oder Reflektorantennen im Rahmen einer MIMO-Radararchitektur gemeinsam mit optischen Sensoren eingebaut werden können, die das gleiche Detektionsfeld überwachen können.

Vorteilhafterweise können Signalverarbeitungseinheiten des Flugkörpers, die an die Sensoranordnung angeschlossen werden, sowohl Messsignale der MIMO-Radararchitektur als auch Messsignale des optischen Sensors bearbeiten und in manchen Fällen zur Verbesserung der Umfelddetektion des Flugkörpers korrelieren können.

Durch die Sensoranordnung entsteht eine hochkompakte multifunktionale Sensoreinrichtung, die die Allwettertauglichkeit des Flugkörpers verbessert und die Unterdrückung von Störsignalen aus verschiedenen Umfeldquellen signifikant erhöht. Außerdem verdoppelt sich die Bildauflösung des Radarsensors aufgrund der MIMO-Radararchitektur gegenüber konventionellen Radarantennenarrays.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen des Flugkörpers kann der Flugkörper ein Lenkflugkörper sein.

Gemäß einiger weiterer Ausführungsformen des Flugkörpers können die vier linearen Arrays aus Antennenelementen eine virtuelle Radarsensorapertur ausbilden.

Gemäß einiger weiterer Ausführungsformen des Flugkörpers kann der optische Sensor eine Kamera sein.

Gemäß einiger weiterer Ausführungsformen des Flugkörpers kann die MIMO-Radararchitektur eine Terahertzscannereinrichtung bilden.

Gemäß einiger weiterer Ausführungsformen des Flugkörpers kann der Flugkörper weiterhin eine Auswerteeinrichtung umfassen, welche Steuerelektronik für die MI-MO-Radararchitektur aufweist.

Gemäß einiger weiterer Ausführungsformen des Flugkörpers kann die Auswerteeinrichtung derartig breitbandig ausgelegt sein, so dass mit der MIMO-Radararchitektur Tiefeninformationen erzeugt und zu einem dreidimensionalen Bild zusammengesetzt werden kann.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine schematische Draufsicht auf eine Sensoranordnung für einen Flugkörper gemäß einer Ausführungsform der Erfindung;
Fig. 2 eine schematische Darstellung eines virtuellen Sensorarrays der Sensoranordnung in Fig. 1; und
Fig. 3 eine schematisches Schaubild eines Flugkörpers mit einer Sensoranordnung gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

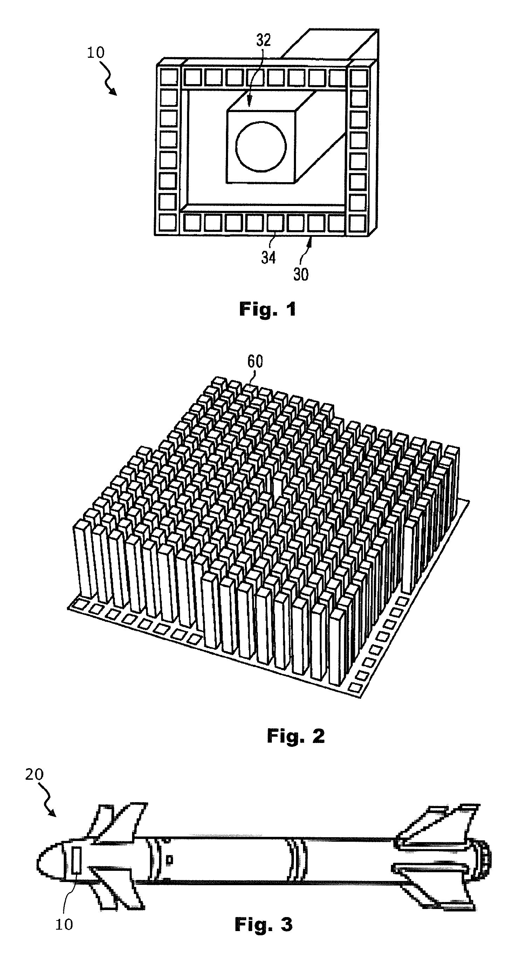

Fig. 1 eine schematische Draufsicht auf eine Sensoranordnung 10 für einen Flugkörper, wie beispielsweise einen Flugkörper 20 in Fig. 3. Die Sensoranordnung 10 weisen, wie in Fig. 1 gezeigt, ein Antennenarray 30 auf, welches Teil einer MIMO-Radararchitektur ist. Die Sensoranordnung 10 weist weiterhin einen optischen Sensor 32 auf, wie beispielsweise eine Kamera 32. Sowohl das Antennenarray 30 als auch der optische Sensor 32 sind auf einem gemeinsamen Substrat angeordnet.

Das Antennenarray 30 ist nur am Rand mit Antennenelementen 34 bestückt. Der dadurch in der Mitte der Anordnung freiwerdende Platz wird für die Anordnung des optischen Sensors 32 genutzt. Diese Anordnung hat den Vorteil, dass beide Sensoren genau den gleichen Blickwinkel haben, was die spätere Sensordatenkombination vereinfacht. Die MIMO-Radararchitektur ist nach dem MIMO-Prinzip ("multiple in multiple out") aufgebaut und kann in einigen Ausführungsformen eine Terahertzscannereinrichtung bilden.

Neben dem Radarsensor und der Kamera 32 kann die Sensoranordnung 10 eine Auswerteeinrichtung und eine Kommunikationseinrichtung aufweisen. Die Auswerteeinrichtung kann dazu ausgelegt sein, mittels einer speziellen Signalverarbeitung, d.h. Konvolution, der Messsignale der MIMO-Radararchitektur eine vollflächige Abbildung zu liefern. Diese vollflächige Abbildung kann einem virtuellen Sensorarray entsprechen, welches schematisch in Fig. 2 mit virtuellen Bildpunkten 60 der MIMO-Radararchitektur nach der Konvolution dargestellt ist.

Die Auswerteeinrichtung kann weiterhin Steuerelektronik für die MIMO-Radararchitektur aufweisen, die derartig breitbandig, beispielsweise im Umfang von einigen Gigahertz, ausgelegt werden kann, so dass zu der vollflächigen Abbildung auch noch Tiefeninformationen erzeugt und zu einem dreidimensionalen Bild zusammengesetzt werden können.

Bestimmte Gegenstände im Umfeld von Flugkörpern liefern nicht genügend Rückstreuenergie für Radarsignale, um diese klar von einem Hintergrund abzugrenzen und zu erkennen. Von der MIMO-Radararchitektur gewonnene Radarbilder haben daher unter Umständen nicht genügend Aussagekraft, um damit alleine eine sichere Abgrenzung von Objekten, beispielsweise Gegenständen oder bodennahen Zielen im Erfassungsbereich des Flugkörpers, zu gewährleisten und darauf eine Steuerung des Flugkörpers zu basieren. Zur Unterstützung der MIMO-Radararchitektur ist der optische Sensor 32 vorgesehen. Mittels Datenfusion beziehungsweise Datenkombination und durch Nutzung von Funktionen aus der Bildverarbeitung in der Sensorsignalauswertung kann eine Verbesserung der Umfelddetektion des Flugkörpers erzielt werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Flugkörper (20), mit:
einer Sensoranordnung (10), welche umfasst:
ein Substrat;
eine MIMO-Radararchitektur bestehend aus vier linearen Arrays aus Antennenelementen (34), welche in einem Rechteck auf dem Substrat angeordnet sind; und
einen optischen Sensor (32), welcher auf dem Substrat angeordnet ist, und von den vier linearen Arrays aus Antennenelementen (34) umschlossen wird.

2. Flugkörper (20) gemäß Anspruch 1, wobei der Flugkörper (20) ein Lenkflugkörper ist.

3. Flugkörper (20) gemäß einem der Ansprüche 1 und 2, wobei die vier linearen Arrays aus Antennenelementen (34) eine virtuelle Radarsensorapertur ausbilden.

4. Flugkörper (20) gemäß einem der Ansprüche 1 bis 3, wobei der optische Sensor (32) eine Kamera ist.

5. Flugkörper (20) gemäß einem der Ansprüche 1 bis 4, wobei die MIMO-Radararchitektur eine Terahertzscannereinrichtung bildet.

6. Flugkörper (20) gemäß einem der Ansprüche 1 bis 5, weiterhin umfassend:
eine Auswerteeinrichtung, welche Steuerelektronik für die MIMO-Radararchitektur aufweist.

7. Flugkörper (20) gemäß einem der Ansprüche 1 bis 6, wobei die Auswerteeinrichtung derartig breitbandig ausgelegt ist, so dass mit der MIMO-Radararchitektur Tiefeninformationen erzeugt und zu einem dreidimensionalen Bild zusammengesetzt werden kann.
